# EUROPEAN PATENT APPLICATION

(11) **EP 2 980 708 A1**
(43) Date of publication of application: **03.02.2016**
(21) Application number: 14179384.4
(22) Date of filing: 31.07.2014
(51) Int. Cl.: G06F 17/30

(54) **Method and system for assigning a content item as a link target to a managed object**

(71) Applicant: Open Text S.A., 2163 Luxembourg (LU)
(72) Inventor: Hinrichs, Henning, 26133 Oldenburg (DE)
(74) Representative: Sieckmann, Dirk Christoph

(57) **Abstract**

The invention provides a method and system of assigning a content item as a link target to a managed object in a web content project of a web content management system. The web content project comprises at least one content page having one or more content items. The method comprises: accessing, in response to a user request, at least part of a content item to be assigned with the link target as the managed object; generating a preview of the at least one content page; adding metadata to the generated preview, the metadata comprising information of the one or more content items on the at least one content page; adding at least one selection means to the generated preview, the at least one selection means enabling selection of at least one of the content items; displaying the preview of the at least one content page with the at least one selection means to a user; selecting, in response to a user request, at least one content item from the generated preview by the at least one selection means; determining an identifier of the at least one selected content item based on the metadata; and storing the identifier as the link target with the managed object.

## Description

### TECHNICAL FIELD

The disclosure relates generally to a web content management method and system. More particularly, this disclosure relates to a method and system for assigning a content item as a link target to a managed object.

### BACKGROUND ART

In web content management systems, content, or content items, can be linked to provide additional information such as background information or show relationship. These links are allowed to be created and used by users such as content editors in several scenarios. These scenarios can be classified using the following criteria: (1) the starting object that is the starting point of the link, the starting object being an object managed by the web content management system that can be assigned one or more target links, such as text elements, image assets, link objects, lists; (2) the editing tool used to access the starting object; (3) the type of the link target; and (4) the link selection tool used.

In common web content management systems, the link selection tool is a tool enabling the editor to code the link using web programming languages or markup languages such as the HyperText Markup Language (HTML), or an elaborated search tool. That is, the editor on the one hand needs to be aware of the content to be linked, in particular the search criteria, and one the other hand needs to have sufficient skills for handling the tool.

There is still a desire and need for improved methods and systems for selecting and coding link targets in web content management systems. In particular, there is a desire and need to support the editor in coding such that it is, for example, not necessary any further that the editor knows names or other technical criteria of the link target.

### SUMMARY

It therefore is an object of the invention to provide an improved method and system for selecting and coding link targets, enabling editors to assign a content item as a link target to a managed object without the need to know names or other technical criteria of the link target.

According to an aspect, the method of assigning a content item as a link target to a managed object in a web content project of a web content management system, the web content project comprises at least one content page having one or more content items, comprises the steps of: accessing, in response to a user request, at least part of a content item to be assigned with the link target as the managed object; generating a preview of the at least one content page; adding metadata to the generated preview, the metadata comprising information of the one or more content items on the at least one content page; adding at least one selection means to the generated preview, the at least one selection means enabling selection of at least one of the content items; displaying the preview of the at least one content page with the at least one selection means to a user; selecting, in response to a user request, at least one content item from the generated preview by the at least one selection means; determining an identifier of the at least one selected content item based on the metadata; and storing the identifier as the link target with the managed object.

Thus, editing content of the web content project can be improved. In particular, it is not necessary any further that the editor knows names or other technical criteria of the link target. In addition, the editor gains intuitive confidence to select the link target intended to be selected. With the above method, it is further achieved that link targets can be managed by the web content management system as well.

In one example, the method further comprises verifying the at least one selected content item using the metadata. Optionally, the verifying comprises at least one of checking whether the at least one selected content item exists in the web content project, checking the type of the at least one selected content item, and checking permission of the at least one selected content item.

Thus, compliance with regard to the permissions and context requirements within the entire web content project can be ensured, even with respect to link targets.

In another example, the preview is generated for at least two content pages, and the generating the preview further comprises adding navigation elements to the preview to enable the user navigating through the at least two content pages.

Thus, the editor is enabled to navigate/surf through the web content project as it has been published but successively generating the preview requires less processing and storage capabilities. That is, the preview is available for display much faster.

According to another aspect, a system that assigns a content item as a link target to a managed object in a web content project comprising at least one content page having one or more content items is provided. The system comprises one or more processing devices configured to: access, in response to a user request, at least part of a content item to be assigned with a link target as a managed object; generate a preview of the at least one content page; add metadata to the generated preview, the metadata comprising information of the one or more content items on the at least one content page; add at least one selection means to the generated preview, the at least one selection means enabling selection of at least one of the content items; display the preview of the at least one content page with the at least one selection means to a user; select, in response to a user request, at least one content item from the generated preview by the at least one selection means; determine an identifier of the at least one selected content item based on the metadata; and store the identifier as the link target with the managed object.

In other examples, the one or more processing devices are further configured to verify the at least one selected content item using the metadata, check whether the at least one selected content item exists in the web content project, check the type of the at least one selected content item, and/or check permission of the at least one selected content item. Optionally, the preview is generated for at least two content pages, and the one or more processing devices are further configured to add navigation elements to the preview to enable navigating through previews of the at least one content page.

In yet other examples of the method and system, the metadata comprises at least one of a content item identifier, type of the content item, visualization data of the content item, and location information defining a location of the content item in the preview of the at least one content page, the selection means comprises at least one of a button associated with the at least one of the content items, a list of content items enabled for selection on the content page, and marking means displayed when hovering with a pointing device over the preview, and/or the identifier of the at least one selected content item is a value of a href attribute of an anchor target.

In further aspects, a computer program product comprising computer-readable instructions which when executed by a processing device causes the processing device to execute the method of assigning a content item as a link target to a managed object in a web content project, and a non-transient machine-readable medium having embodied thereon the computer program product are provided.

### BRIEF DESCRIPTION OF THE DRAWINGS

The drawings accompanying and forming part of this specification are included to depict certain aspects of the invention. A clearer impression of the invention, and of the components and operation of systems provided with the invention, will become more readily apparent by referring to the exemplary, and therefore non-limiting, embodiments illustrated in the drawings, wherein identical reference numerals designate the same components. Note that the features illustrated in the drawings are not necessarily drawn to scale.
FIG. 1 is a simplified block diagram of a web content management system.
FIG. 2 is a flow chart/diagram illustrating a method of assigning a content item as a link target to a managed object in a web content project, in accordance with one embodiment of the present invention (SLS minimal method).
FIG. 3 is a flow chart/diagram illustrating a method of assigning a content item as a link target to a managed object in a web content project, in accordance with another embodiment of the present invention (SLS basic method).
FIG. 4 is a flow chart/diagram illustrating a method of assigning a content item as a link target to a managed object in a web content project, in accordance with yet another embodiment of the present invention (SLS main scenario).
FIGS. 5A to 5D illustrate an example scenario of using the method and system in accordance with one embodiment of the invention.

### DETAILED DESCRIPTION

The invention and the various features and advantageous details thereof are explained more fully with reference to the non-limiting embodiments that are illustrated in the accompanying drawings and detailed in the following description.

Embodiments discussed herein can be implemented in suitable computer-executable and/or machine-executable instructions that may reside on a computer-readable and/or a machine-readable medium (e.g., a hard disk (HD)), hardware circuitry or the like, or any combination.

The invention generally pertains to content management methods and systems, especially web content management methods and systems. In particular, the invention pertains to a method and system of assigning a content item as a link target to a managed object in a web content project of a web content management system.

A content management system (CMS) is an application, usually computer-implemented, that allows publishing, editing and modifying content, organizing, deleting as well as maintenance from a central interface. CMS usually provide procedures to manage workflow in a collaborative environment. Most systems use a content repository or a database to store page content, metadata, and other information assets that might be needed by the CMS.

Most of the CMS are used to run websites containing blogs, news, and shopping. The CMS are then called web content management systems (WCMS). The WCMS usually is a software system that provides website authoring, collaboration, and administration tools designed to allow users with little knowledge of web programming languages or markup languages to create and manage website content with relative ease.

WCMS can manage objects of various types, such as content items (e.g., texts, assets, but also of user-defined types), and structural items, e.g., attributes of other objects, references to other objects used to build the web content project structure. For some structural object types, editors can specify content items during editing them.

The managed object, insofar as used as starting object for the method in accordance with an embodiment of the invention, (also referred to as starting object or content object) is an object managed by the WCMS that can be assigned one or more links, such as text elements, image assets, link objects, lists, or the like.

A digital asset is any item of text or media that has been formatted into a binary source. Digital assets are usually categorized in three major groups: textual content (digital assets), images (media assets) and multimedia (media assets). In the field of WCMS, structural elements such as style sheets, or the like, are understood as assets as well.

Now, non-limiting embodiments of the invention are explained in more detail by making reference to the accompanying drawings.

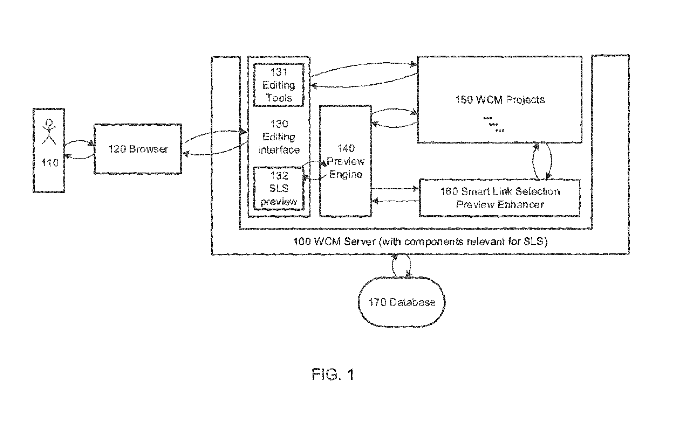

In FIG. 1, a web content management system according to one embodiment of the present invention is illustrated.

The method and system according to the present invention (designated as Smart Link Selection, SLS) is part of the WCMS shown in FIG. 1.

The WCMS comprises a web content management server 100, a browser 120, an editing interface 130, a preview engine 140, a SLS preview enhancer 160, and a database 170. For example, the web content management server 100, the browser 120, the editing interface 130, the preview engine 140, the SLS preview enhancer 160 are software applications, that is, parts of the software system constituting the WCMS, executed by one or more processing devices such as a mobile terminal device, laptop, computer, server, PDA, smartphone, or the like. The database 170 comprises a processing device such as a server, or the like, on which a database management system software is executed and a storage device such as a hard disk, or the like, in communication with the processing device. The browser 120 is, for example, Microsoft's Internet Explorer, Google's Chrome browser, Apple's Safari browser, or the like.

The web content management server 100 manages web content projects 150 stored in the database 170. An editing user 110 communicates with the web content management server 100 via a communication network such as a Local Area Network, a mobile communication network, the Internet, or any other suitable communication connection. The editing user 110 uses the browser 120 to access the editing interface 130 of the WCMS. The user 110 selects an editing tool 131 to edit an object managed by the WCMS (referred to as a managed object, starting object, or content object hereinafter) from a web content project 150 managed by the WCMS. One example of the editing tool 131 is a rich text editor. The SLS preview 132 is accessed by the editing tool 131 to select a content item as a link target. The editing interface 130 further comprises the preview engine 140 that allows to generate a preview of the web content project 150, or part thereof. For example, the preview engine 140 generates a preview of the web content project 150 to which the starting object edited by the user 110 belongs to. The SLS preview enhancer 160 is used to add metadata and selection means to the preview, which then are presented via the editing interface 130 and the browser 120 to the user 110. A detailed description of the functions/operations performed by each part of the WCMS is provided below.

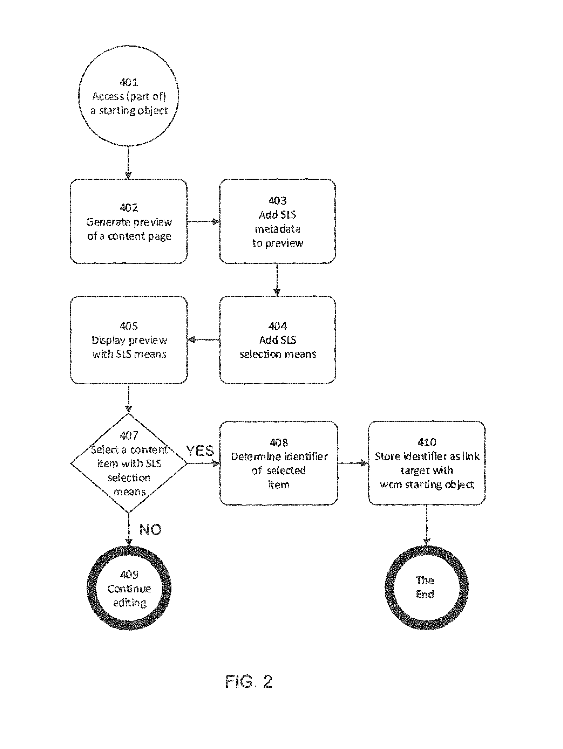

FIG. 2 shows a flow chart/diagram illustrating a method of assigning a content item as a link target to a managed object in a web content project. The method illustrated in FIG. 2 is one exemplary embodiment of the invention (referred to as SLS minimal method). The method may be performed by one or more processing devices such as server, computer, laptop, or the like. In accordance with one example, the method may be performed by the WCMS shown in FIG. 1.

The web content project 150 managed by the web content management server 100 comprises at least one content page having one or more content items. The at least one content page and/or the one or more content items are stored in the database 170. Furthermore, the content item assigned as the link target is one of these one or more content items stored in the database 170. The managed object is any object managed by the WCMS.

The method starts at block 401. In block 401, at least a part of a content item managed by the web content management server 100 and stored in the database 170 is accessed using the editing tools 131. The editing tools 130 are accessed by the user 110 via the browser 120. In more detail, the user 110 uses the browser 120 to select or indicate a content item, or at least a part thereof, which is to be assigned with the link target. The content item, or at least the part thereof, is presented to the user 110 by the editing interface 130. The editing tools 130 enable the user 110 to select and edit the content item, or the part thereof. A request to access the content item, or the part thereof, is issued. The request is communicated from the browser 120 to the editing tools 131. In response to receiving the request, the content item, or the part thereof, is accessed as the managed object.

Then, in block 402, a preview of at least one content page of the web content project 150 is generated by the preview engine 140. This is performed automatically, or in response to a request issued by the user 110 via the browser 120. For example, the preview engine 140 generates the preview of only one content page such as the starting page, or all content pages, of the web content project 150. Another alternative example will be described below.

After generating the preview, metadata is added by the SLS preview enhancer 160, in block 403. The metadata to be added comprises information of the content items on the content page, or the content pages, of the preview. For example, the metadata comprises at least one of a content item identifier, type of the content item, visualization data of the content item, and location information defining a location of the content item in the preview.

In block 404, the SLS preview enhancer 160 adds at least one selection means to the generated preview. The selection means enable selection of at least one of the content items. For example, the selection means comprises at least one of a button associated with the at least one of the content items, a list of content items enabled for selection on the content page, and marking means displayed when hovering with a pointing device such as a mouse device, or the like, over the preview.

After adding the metadata and the selection means, the preview is presented, that is displayed, via the editing interface 130 and the browser 120 to the user 110, in block 405. Specifically, the preview is displayed in the browser 110 as a content page.

In block 407, the user 110 selects at least one content item from the preview displayed via the editing interface 130 and the browser 120. To be more specific, the user 110 selects the at least one content item using the selection means. In the above example of the button associated with the content item, the user 110 clicks on the button to select the content item associated therewith. In another example, a list containing content items contained in the content page displayed to the user 110 and enabled for selection is presented to the user 110 via the editing interface 130 and the browser 120. The user 110 then selects one or more of the content items of the list.

After selecting, an identifier of the selected content item, or of each of the selected content items, is determined, in block 408. The determination is based on the metadata added to the preview of the content page for which the preview has been generated. For example, the identifier is derived from the content item identifier comprised in the metadata. The identifier can be a value of a href attribute of an anchor target in case of using HTML.

In case no content item is to be selected, the method terminates, or allows to further edit the managed object using the editing tools 130, in block 409.

In block 410, the identifier determined in block 409 is stored as the link target with the managed object. For example, the identifier is stored as part of the managed object in the database 170.

As a result, when the content page including the managed object is processed for preview or display, the managed object is provided with a link to the content item selected from the preview as the link target. If, for example, the user 110 clicks on the managed object, more specifically the link, the user 110 is transferred to the content item selected from the preview, similar to hyperlinking in HTML.

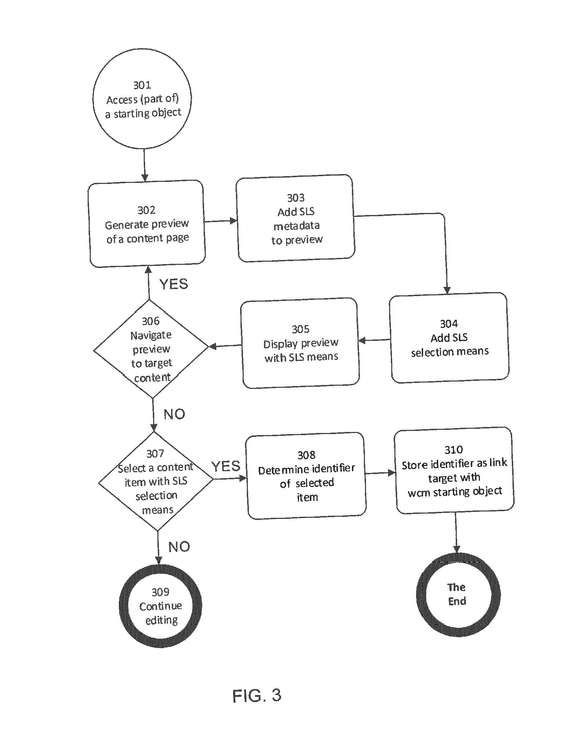

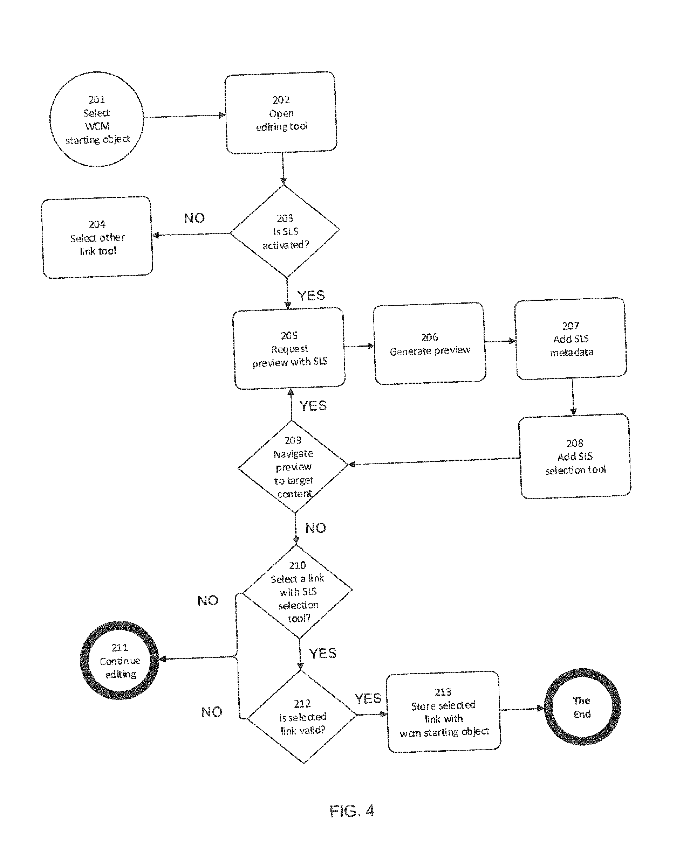

Now referring to FIGS. 3 and 4, examples of the SLS minimal method shown in FIG. 2 will be described.

FIG. 3 shows a flow chart/diagram illustrating a method of assigning a content item as a link target to a managed object in a web content project according to another exemplary embodiment of the invention. The method illustrated in FIG. 3 (referred to as SLS basic method) comprises the steps of the method shown in FIG. 2. In more detail, blocks 301, 303, 304, 305, 307, 308, 309, and 310 substantially correspond to the blocks 401, 403, 404, 405, 407, 408, 409, and 410 shown in FIG. 2, respectively. Explanation of these steps therefore will be omitted here. Reference is respectfully made to the illustration and explanation of FIG. 2.

In block 302, the preview is generated by the preview engine 140. Here, the preview is generated for more than one, or all, content pages of the web content project 150. For example, the preview of the starting page and each content page linked with the starting page is generated. In more detail, it is determined whether the starting page (content page at the first stage) comprises content items being linked to content items of content pages different than the starting page (content pages at the second stage). Then, the preview of the starting page and the content pages different than the starting page is generated. Thus, the preview comprises more than one content page. Also, the preview can be generated for content pages at the third or any further stage. That is, the content pages being linked to the content pages at the second stage are determined and included in the preview.

Further, in block 302, navigation elements are added to the preview generated. The navigation elements enable the user 110 to navigate through the content pages of the preview. For example, the navigations elements are hyperlinks in case of HTML. Also, the navigation elements can comprise buttons enabling the user 110 to go to a previously displayed content page similar to the back button, or the starting page similar to the home button, both buttons are known from commonly used Internet browsers. This enables the user 110 seeking for a content item to be assigned as the link target to surf or navigate through the content pages of the preview, in block 306. If the content item to be assigned as the link target is found, the flow continues with block 307.

In one particular example of the embodiment illustrated in FIG. 3, the flow can continue with blocks 302, 303, 304 and 305 if the user 110 tries to navigate to a content page for which no preview has been generated. For example, the preview of the starting page only is generated in block 302 and then presented to the user 110 in block 305, while at least one link to another content page for which the preview has not been generated is present in the starting page. Now, if the user 110 clicks on the link to navigate to the other content page, in block 306, the flow is continued with block 302 and the preview of the other content page is generated. After adding the metadata in block 303 and the selection means in block 304, as described above with reference to FIG. 2, the preview of the other content page is displayed to the user in block 305.

FIG. 4 shows a flow chart/diagram illustrating a method of assigning a content item as a link target to a managed object in a web content project according to yet another exemplary embodiment of the invention. The method illustrated in FIG. 4 (referred to as SLS main scenario flow) comprises the steps of the method shown in FIG. 2. In more detail, blocks 201, 205, 206, 207, 208, 210, 211, and 213 substantially correspond to the blocks 401, 403, 404, 405, 407, 408, 409, and 410 shown in FIG. 2, respectively. Furthermore, block 209 substantially corresponds to block 306 shown in FIG. 3. Detailed explanation of these blocks therefore will be omitted here. Reference is respectfully made to the illustrations and explanations of FIGS. 2 and 3.

The flow starts with the selection of a managed object in block 201. For this object, an editing tool 131 provided by the web content management system is opened in block 202. In block 203, it is determined whether SLS is activated for the editing tool 131 selected in block 202 or not. If not activated, another link selection tool must be used in block 204. Otherwise, using SLS, a preview of the web content project to which the managed object belongs to is requested from the web content management server 100 in block 205. Then, in block 206, the web content management server 100 first generates the preview using the preview engine 140. If a link target has been previously assigned to the managed object, the preview containing the content of this previously assigned link target is generated as well, if possible. Before the preview is presented to the editing user's browser 120, SLS preview enhancer 160 adds metadata in block 207 and selection means in block 208 to the preview. The metadata added to the generated preview provide the SLS with the information for mapping the selected content page, or part thereof, to the content item and present content items being selectable. The metadata comprise at least one of content item identifiers, types, visualization data, and location information where the content item is displayed within the preview. The selection means allow the editor to select the link target by mapping the displayed preview, or parts thereof, to the content item using the metadata. With these additions, the preview is presented to the editing user 110 via the SLS preview 132 and the browser 120. If the content item the editing user 110 wants to select as link target, is not presented - respectively not selectable by the added selection means - on the preview in block 209, the editing user 110 surfs to another content page of the preview by using navigation elements provided in the preview (which, typically, are presented like the normal navigation links of the web content projects published web site). This navigation results in a new request to a preview of the other content page with SLS to the web content management server 100 in block 205. The web content management server 100 then repeats steps 206 to 208 for the preview with the other content page. The editing user 110 can repeat surfing until the editing user 110 reaches the preview of the content page that presents the link target to be selected, or can respectively be selected by the added selection means. If the editing user 110 does not select a link target this way in block 210, using SLS can be ended and editing can be continued, block 211. If the editing user 110 then selects a link target by the selection means in block 210, the SLS, the web content management server 100, or any other component of the WCMS, checks whether the selected link target is valid in the given context, block 212. For example, it is verified that the metadata of the selected content item correspond to an existing content item in the WCMS that has, if required, the correct type, permissions, and further attributes matching the context requirements. If so, an identifier of the selected link target is determined and stored with the managed object, for example, as value of the href attribute of an anchor target wrapping the managed object, if the managed object is part of an HTML instance, block 213. Otherwise, if the selected link target is not valid, using SLS ends and editing can be continued in block 211.

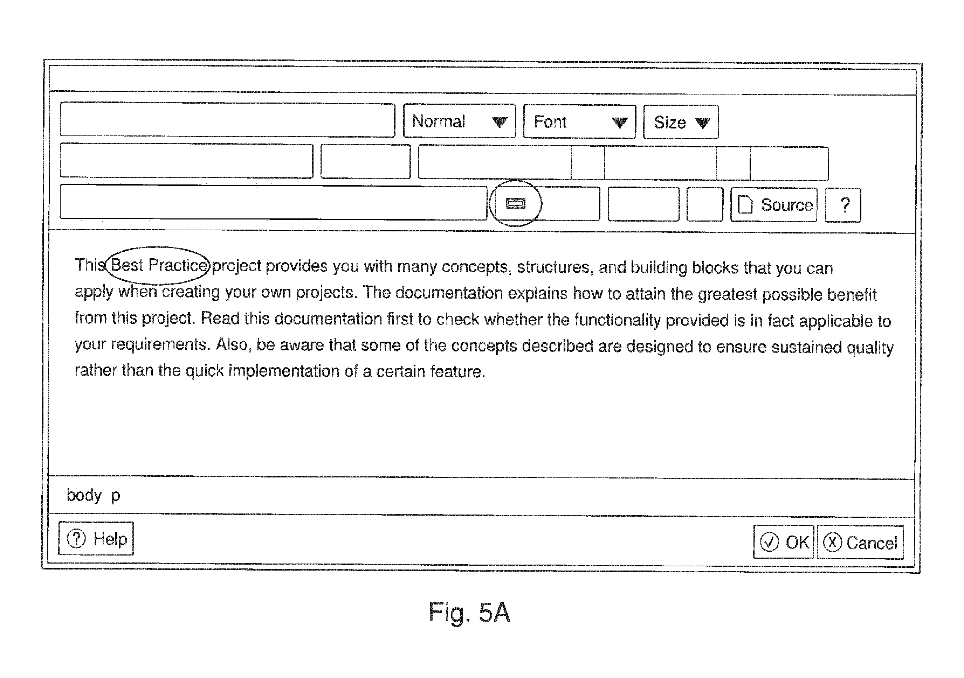

In FIGS. 5A to 5D, an example scenario of using the method and system in accordance with one embodiment of the invention is illustrated.

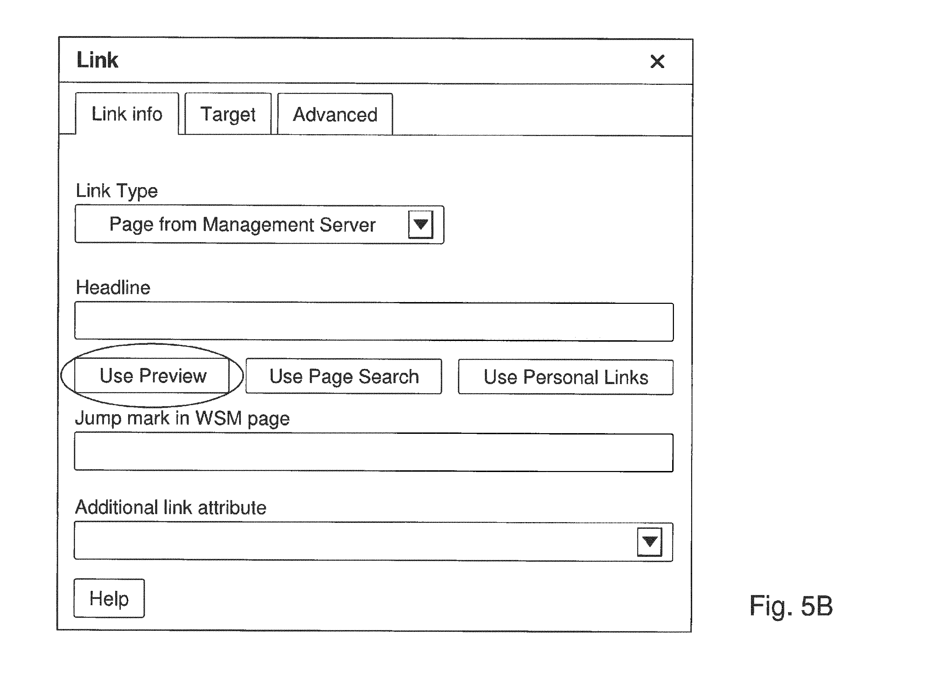

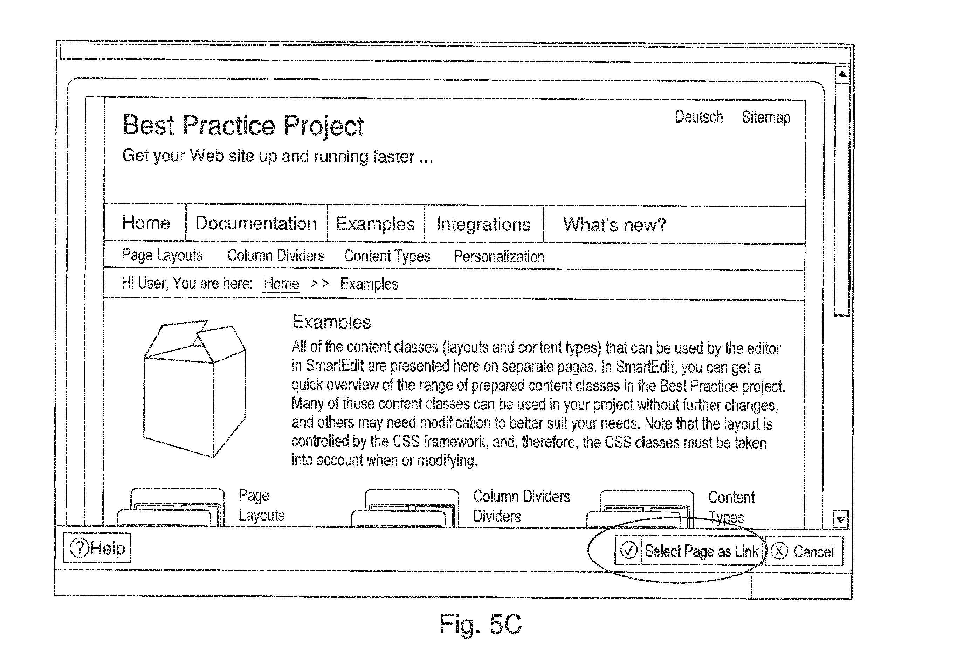

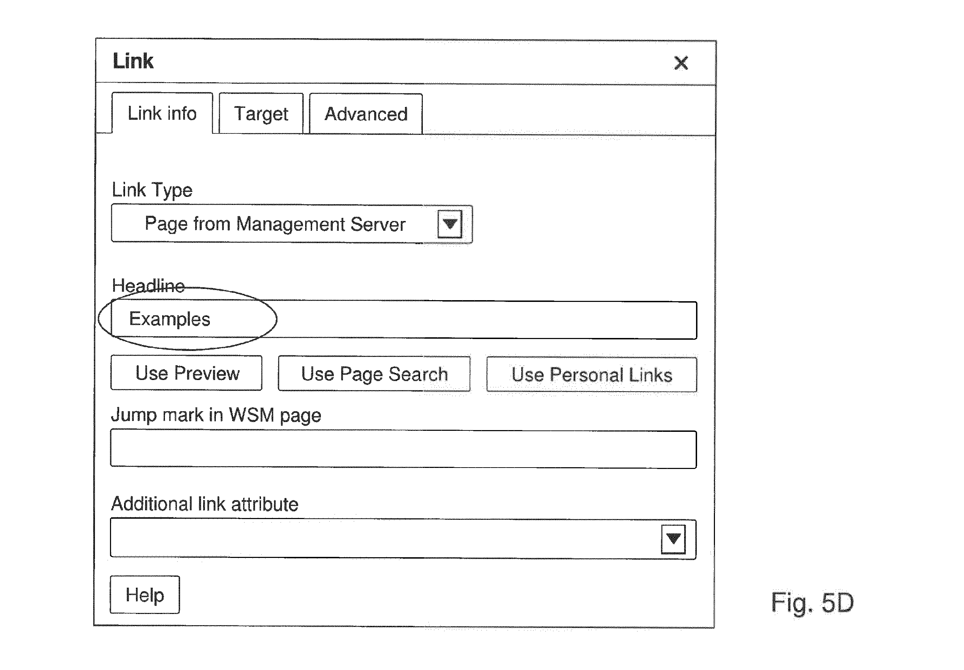

To be more specific, a rich text editor as the editing tools 131 shown in FIG. 1 is used by an editor (i.e., user 110 shown in FIG. 1) to edit a content item of a web content project. See FIG. 5A. Here, the editor wants to select a link target for the words "Best Practice", for example, in order to provide additional information such as the definition thereof. To do so, the editor marks the words "Best Practice" and clicks on a button associated with the function to select the link target. Then, the link selection tool such as the SLS is opened by the editor. Therein, the editor requests to generate and display the preview, for example, by clicking on a button. See FIG. 5B. In response thereto, the preview is generated and displayed in a new window of the browser. In the preview, the editor can surf to the content page including the content item, i.e., the additional information concerning "Best Practice", to be selected as link target. To select the content item, the editor clicks on a button (i.e., selection means). Here, the selection means enable selection of the entire content page. See FIG. 5C. Then, additional information for the link target can be input and the link target is stored together with the additional information for the words "Best Practice". See FIG. 5D.

In accordance with the above described embodiments of the invention, the SLS is a link selection tool which can be used in several scenarios, including: (1) the starting object is some part of a content item managed by the WCMS; (2) the editing tool is a rich text editor; (3) the type of the link target is another content item.

In general, the SLS lets the editor (i.e., user 110) select a content item indirectly by opening a preview (e.g., a preview window in the browser 120). A preview of the content page is displayed as it would be published by the WCMS. The editor can then surf within the preview to the content page that contains the content item the editor wants to select as link target. A button (i.e., selection means) lets the editor select the content item of the displayed preview as link target. Optionally, additional or other selection means enable the editor to select other content items displayed in the preview (e.g., by clicking on markers displayed when hovering with the mouse device over the preview of the content page, or by selecting from an additional selection box).

The main advantages of using the method and system of the invention, i.e., the SLS, are: (1) The editor does not have to know names or other technical criteria of the link target content item, which is typically required by other link selection tools; (2) Compared with other link selection tools such as search, the link selection with SLS is faster; (3) Due to the preview, the editor gains intuitive confidence that the editor has selected the link target wanted to be selected; and (4) The editor can leverage own knowledge of the published web content project to select the link target.

The invention is preferably implemented by software, but can also be implemented in hardware or a combination of hardware and software. The invention can also be embodied as computer-readable code on a computer-readable medium. The computer-readable medium is any data storage device that can store data which can thereafter be read by a computer system. Examples of the computer-readable medium include read-only memory, random-access memory, CD-ROMs, DVDs, magnetic tape, optical data storage devices, and carrier waves. The computer-readable medium can also be distributed over network-coupled computer systems so that the computer-readable code is stored and executed in a distributed fashion.

While this invention has been described in terms of several preferred embodiments, there are alterations, permutations, and equivalents, which fall within the scope of this invention.

It should also be noted that there are many alternative ways of implementing the methods and apparatuses of the invention.

It is therefore intended that the following appended claims be interpreted as including all such alterations, permutations, and equivalents as fall within the scope of the present invention as defined by the appended claims.

## Claims

1. A method of assigning a content item as a link target to a managed object in a web content project of a web content management system, the web content project comprises at least one content page having one or more content items, the method comprises the steps of:
accessing, in response to a user request, at least part of a content item to be assigned with the link target as the managed object;
generating a preview of the at least one content page;
adding metadata to the generated preview, the metadata comprising information of the one or more content items on the at least one content page;
adding at least one selection means to the generated preview, the at least one selection means enabling selection of at least one of the content items;
displaying the preview of the at least one content page with the at least one selection means to a user;
selecting, in response to a user request, at least one content item from the generated preview by the at least one selection means;
determining an identifier of the at least one selected content item based on the metadata; and
storing the identifier as the link target with the managed object.

2. The method of claim 1, further comprising verifying the at least one selected content item using the metadata.

3. The method of claim 2, wherein the verifying comprises at least one of checking whether the at least one selected content item exists in the web content project, checking the type of the at least one selected content item, and checking permission of the at least one selected content item.

4. The method of any one of claims 1 to 3, wherein the preview is generated for at least two content pages, and wherein the generating the preview further comprises adding navigation elements to the preview to enable the user navigating through the at least two content pages.

5. The method of any one of claims 1 to 4, wherein the metadata comprises at least one of a content item identifier, type of the content item, visualization data of the content item, and location information defining a location of the content item in the preview of the at least one content page.

6. The method of any one of claims 1 to 5, wherein the selection means comprises at least one of a button associated with the at least one of the content items, a list of content items enabled for selection on the content page, and marking means displayed when hovering with a pointing device over the preview.

7. The method of any one of claims 1 to 6, wherein the identifier of the at least one selected content item is a value of a href attribute of an anchor target.

8. A system that assigns a content item as a link target to a managed object in a web content project, the web content project comprises at least one content page having one or more content items, comprising:
one or more processing devices configured to:
access, in response to a user request, at least part of a content item to be assigned with a link target as a managed object;
generate a preview of the at least one content page;
add metadata to the generated preview, the metadata comprising information of the one or more content items on the at least one content page;
add at least one selection means to the generated preview, the at least one selection means enabling selection of at least one of the content items;
display the preview of the at least one content page with the at least one selection means to a user;
select, in response to a user request, at least one content item from the generated preview by the at least one selection means;
determine an identifier of the at least one selected content item based on the metadata; and
store the identifier as the link target with the managed object.

9. The system of claim 8, wherein the one or more processing devices are further configured to verify the at least one selected content item using the metadata.

10. The system of claim 9, wherein the one or more processing devices are further configured to check whether the at least one selected content item exists in the web content project, check the type of the at least one selected content item, and/or check permission of the at least one selected content item.

11. The system of claim 9 or 10, wherein the preview is generated for at least two content pages, and wherein the one or more processing devices are further configured to add navigation elements to the preview to enable navigating through previews of the at least one content page.

12. The system of any one of claims 9 to 11, wherein the metadata comprises at least one of a content item identifier, type of the content item, visualization data of the content item, and location information defining a location of the content item in the preview of the at least one content page.

13. The system of any one of claims 9 to 12, wherein the selection means comprises at least one of a button associated with the at least one of the content items, a list of content items enabled for selection on the content page, and marking means displayed when hovering with a pointing device over the preview.

14. The system of any one of claims 9 to 13, wherein the identifier of the at least one selected content item is a value of a href attribute of an anchor target.

15. A computer program product comprising computer-readable instructions which when executed by a computer causes the computer to execute the method of any one of claims 1 to 7.
